# EUROPÄISCHE PATENTSCHRIFT

(11) **EP 3 451 463 B1**
(45) Veröffentlichungstag und Bekanntmachung des Hinweises auf die Patenterteilung: **26.08.2020**
(21) Anmeldenummer: 17306142.5
(22) Anmeldetag: 04.09.2017
(51) Int. Cl.: H01R 13/52, H01R 31/02, H02G 15/013

(54) **ANORDNUNG ZUM VERBINDEN ELEKTRISCHER LEITUNGEN**
ASSEMBLY FOR CONNECTION OF ELECTRICAL LINES
SYSTÈME DE BRANCHEMENT DE CONDUITES ÉLECTRIQUES

(43) Veröffentlichungstag der Anmeldung: 06.03.2019
(73) Patentinhaber: Nexans, 92400 Courbevoie (FR)
(72) Erfinder: HUSCHER, Rainer, WAaldershof (DE); SENDLER, Kai, Dörfles-Esbach (DE)
(74) Vertreter: Feray, Valérie

(56) Entgegenhaltungen:
- EP-A2- 0 320 236
- DE-A1- 2 456 471
- DE-A1-102013 011 874
- GB-A- 2 164 805
- US-A1- 2015 114 711
- US-B1- 6 218 620

## Beschreibung

### Gebiet

Die Erfindung betrifft eine Anordnung zur elektrisch leitenden Verbindung von mit einem elektrischen Schirm versehenen elektrischen Leitungen, bei welcher die Leiter der Leitungen im Bereich einer Verbindungsstelle elektrisch leitend miteinander verbunden sind. Die eine oder mehreren Verbindungsstellen sind vollständig von einem Gehäuse aus Isoliermaterial umgeben, das gegen Umwelteinflüsse abgedichtet ist.

### Hintergrund

Eine solche Anordnung wird beispielsweise in Kraftfahrzeugen eingesetzt, deren Verbraucher und Geräte in zunehmendem Maße aus Stromquellen mit erhöhter Spannung versorgt werden. Die dabei eingesetzten Stromquellen können für Spannungen ausgelegt sein, die bis zu 1000 V betragen können. Verbraucher sind beispielsweise Klimakompressoren und insbesondere bei Elektrofahrzeugen vorhandene Heizgeräte. Ein aktives Gerät ist beispielsweise das Ladegerät zum Aufladen einer Batterie. Für die Verbindung von Verbrauchern und Geräten mit einer entsprechenden Batterie bzw. mit einer an dieselbe angeschlossenen Steuerelektronik werden mit einem elektrisch wirksamen Schirm versehene elektrische Leitungen eingesetzt. Diese Leitungen können beispielsweise in einem Verteiler miteinander verbunden werden. Dabei müssen die Schirme wegen der hohen, oben erwähnten Spannungen für einen sicheren Berührungsschutz und auch aus Gründen der elektromagnetischen Verträglichkeit (EMV) wirksam durchverbunden, d. h. unterbrechungsfrei weitergeführt werden. Die ganze Anordnung soll außerdem feuchtigkeitsdicht sein, insbesondere dann, wenn sie in einem Kraftfahrzeug angeordnet ist.

Bei Anordnungen zur Verbindung von mehreren elektrischen Leitungen müssen viele Komponenten abgedichtet werden, die auch außerhalb der Anordnung großen Belastungen in Gestalt von Vibrationen Biegungen usw. ausgesetzt sind. Diese Einflüsse können sich ungünstig auf die Dichtigkeit der Anordnung auswirken.

Aus der DE 10 2013 016 099 A1 ist eine Anordnung bekannt, bei der die Leiter von beispielsweise drei geschirmten elektrischen Leitungen in einer Verbindungsstelle elektrisch leitend miteinander verbunden sind. Um die Verbindungsstelle herum ist ein Schirmgehäuse angeordnet, an welches die Schirme der Leitungen angeschlossen und dadurch miteinander verbunden sind. Um das Schirmgehäuse ist ein Isolationselement aus Polyurethan (PUR) herumgespritzt, welches das Schirmgehäuse vollständig und die Enden der Leitungen teilweise umgibt. Die Herstellung dieser Anordnung ist wegen des Spritzvorgangs zur Herstellung des Isolationselements aufwendig. Die erforderliche Abdichtung gegenüber Feuchtigkeit ist außerdem nur dann gegeben, wenn das Material des Isolationselements sich ausreichend fest mit dem Material der die Leitungen umgebenden Mäntel verbindet. Aus diesem Grund ist die bekannte Anordnung nicht für jede Art von Leitung gleichermaßen geeignet. Die Eignung hängt insbesondere von der Art des Mantelmaterials ab.

Aus der DE 24 56 471 A1 , die als nächstliegender Stand der Technik angesehen wird, ist eine Ubergangsmuffe zum Verbinden eines Mantelkabels mit einem Kunststoffkabel bekannt. Die Übergangsmuffe weist ein Muffenrohr auf, dessen Stirnseiten mit einem Ring bzw. einer Isolierhülse verschlossen sind, die den Innenraum der Übergangsmuffe jeweils mit Dichtungen zum Außenraum hin abdichten.

Die US 2015/0114711 A1 zeigt eine Anordnung zum Verbinden von abgeschirmten Leitungen. Die Anordnung weist ein Gehäuse auf, in dessen Innerem die Leitungen miteinander verbunden sind. Das Gehäuse weist Endkappen mit Dichtungen auf, die das Gehäuse abgedichtet verschließen.

In der DE 10 2013 011874 A1 ist ein Leistungsverteiler für Hochvoltversorgungsleitungen beschrieben. Ein Verteilergehäuse umschließt einen Anschlussraum, in welchem eingehende und abgehende Versorgungsleitungen miteinander verbunden sind. Das Verteilergehäuse ist gegenüber der Umwelt abgedichtet.

Die EP 0 320 236 A2 schlägt eine Anordnung zum Verbinden von Telekommunikationskabeln vor, mittels der die Verbindungsstellen zwischen den einzelnen Leitungen der Telekommunikationskabel in einem Gehäuse aufgenommen sind, das mit Endkappen und entsprechenden Dichtungen gegenüber der Umwelt abgedichtet ist.

Die US 6,21 8,620 B1 zeigt ein längliches wasserdicht abgedichtetes Gehäuse für verbundene Telefonkabel. Das Gehäuse besteht aus 2 miteinander verbundenen Hälften, die entlang eines Scharniers zusammenklappbar sind. Im Inneren des Gehäuses befindet sich eine geschlitzte Dichtung, welche die Abdichtung des Gehäuses sicherstellt.

Schließlich ist aus der GB 2 164 805 A ein abgedichtetes Gehäuse bekannt, welches die Verbindungsstelle von Leitungen aufnimmt. Der Leerraum im Inneren des Gehäuses ist mit einem Füllmaterial gefüllt.

Der vorliegenden Erfindung liegt die allgemeine Aufgabe zu Grunde, eines oder mehrere der genannten Probleme, mit denen bekannte Anordnungen zur Verbindung von mehreren elektrischen Leitungen behaftet sind, zu beheben oder zumindest zu verbessern.

### Zusammenfassung der Erfindung

Zur Lösung dieser Aufgabe schlägt die Erfindung eine Anordnung zur elektrisch leitenden Verbindung mehrerer elektrischer Leitungen vor, die mit einem elektrisch leitenden Schirm versehen sind. Die Leiter der Leitungen sind im Bereich einer Verbindungsstelle elektrisch leitend miteinander verbunden. Die Anordnung umfasst ein mechanisch stabiles Gehäuse, das die Verbindungsstelle vollständig umschließt. Beispielsweise kann das Gehäuse aus Isoliermaterial bestehen. Die Anordnung zeichnet sich zum einen durch einen Dichtungsträger aus, der einen Konus aufweist, der in der Montageposition in dem Gehäuse aufgenommen ist. Zum anderen zeichnet sich die Anordnung dadurch aus, dass der Dichtungsträger eine Leitungsdichtung und eine Gehäusedichtung trägt. Der Konus sorgt für einen festen und spielfreien Sitz des Dichtungsträgers in dem Gehäuse.

Zweckmäßigerweise kann die Leitungsdichtung zwischen einer Leitung und dem Dichtungsträger angeordnet sein und die Gehäusedichtung kann zwischen dem Gehäuse und dem Dichtungsträger angeordnet sein. Die Leitungsdichtung dichtet den Dichtungsträger gegenüber einer Leitung ab, während die Gehäusedichtung den Dichtungsträger gegenüber dem Gehäuse abdichtet.

Vorzugsweise ist in dem Gehäuse eine weitere Dichtung angeordnet, die das Gehäuse abdichtet.

Bei einer vorteilhaften Ausführungsform der Erfindung ist eine Abdeckkappe vorgesehen, die mit dem Gehäuse mechanisch fest verbunden ist. Die feste Verbindung kann beispielsweise erzielt werden, indem die Abdeckkappe mit dem Gehäuse verrastet. Grundsätzlich ist die Erfindung unabhängig davon, auf welche Art und Weise eine mechanisch stabile Verbindung zwischen der Art der Kappe dem Gehäuse hergestellt wird. Durch diese Ausgestaltung ist sichergestellt, dass auf die Leitungen ausgeübte Kräfte von der Abdeckkappe aufgenommen und direkt in das Gehäuse eingeleitet werden. Auf die Dichtungen, die auf dem Dichtungsträger sitzen, werden keine Kräfte ausgeübt, die zu einer Beeinträchtigung der Dichtfunktion von Leitungsdichtung und/oder Gehäusedichtung führen könnten.

In einer weiteren Ausführungsform der Anordnung ist in dem Gehäuse aus Isoliermaterial ein Füllkissen vorgesehen, das den Zwischenraum zwischen der Verbindungsstelle der Leitungen und einem Abschirmungsgehäuse oder dem Gehäuse aus Isoliermaterial ausfüllt. Dadurch ist es verzichtbar, den Innenraum des Gehäuses mit Spritzmasse auszufüllen, was produktionstechnische Vorteile bietet.

### Kurze Beschreibung der Zeichnung

Nachfolgend wird die Erfindung anhand von Ausführungsformen unter Bezugnahme auf die begleitenden Figuren exemplarisch näher erläutert. Es zeigen
- Fig. 1: eine Draufsicht auf ein Schirmblech, das eine Verbindungsstelle abschirmt;
- Fig. 2A: einen Querschnitt durch eine Leitung aus Fig. 1 in einer schematischen Darstellung;
- Fig. 2B: eine in dem Gehäuse befindliche Verbindungsstelle von drei elektrischen Leitungen;
- Fig. 3: eine schematische Darstellung einer erfindungsgemäßen Anordnung im Querschnitt;
- Fig. 4A: einen Ausschnitt aus Fig. 3 in einen vergrößerten Maßstab im Querschnitt;
- Fig. 4B: eine Teilansicht der Anordnung aus Fig. 3 in einer Draufsicht;
- Fig. 5: eine schematische Darstellung einer weiteren Anordnung im Querschnitt; und
- Fig. 6: eine schematische Darstellung einer weiteren Anordnung in einer Explosionsdarstellung.

Gleiche oder ähnliche Elemente sind in den Figuren mit gleichen oder ähnlichen Bezugszeichen versehen.

### Ausführungsbeispiel

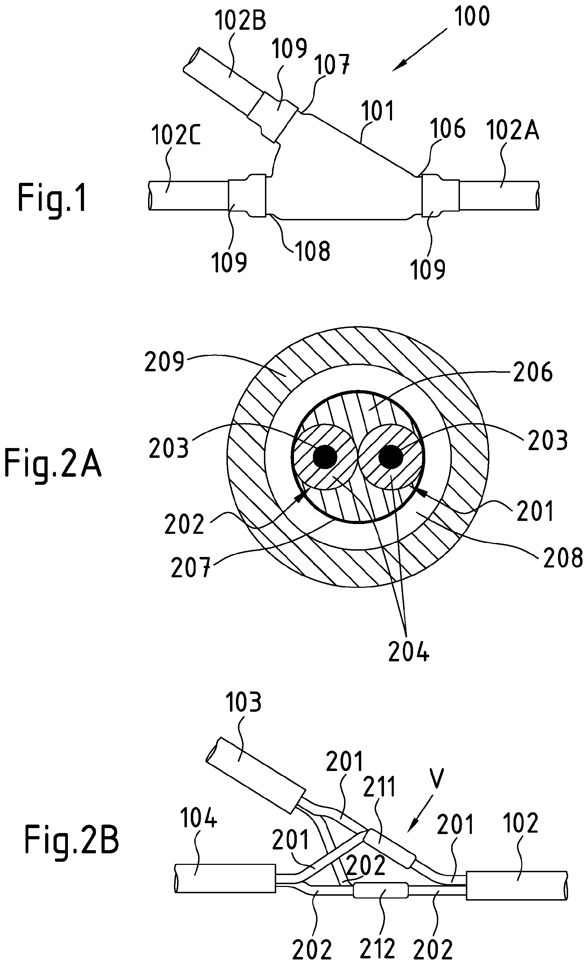

Fig. 1 zeigt ein Schirmblech 101, wie es in einer erfindungsgemäßen Anordnung zum elektrischen Verbinden von Leitungen eingesetzt wird. Bei dem in Fig. 1 dargestellten Ausführungsbeispiel ist das Schirmblech 101 einteilig ausgebildet. In das Schirmblech 101 führen drei jeweils einen elektrisch wirksamen Schirm aufweisende elektrische Leitungen 102A-102C hinein. Die Leitung 102A ist beispielsweise an eine in einem Kraftfahrzeug angeordnete Spannungsquelle bzw. an eine mit derselben verbundene Steuerelektronik angeschlossen und die Leitungen102B und 102C können zu Verbrauchern bzw. elektrischen Geräten führen, die sich in dem Kraftfahrzeug befinden. Die Leiter der Leitungen sind in einer von dem Schirmblech 101 umschlossenen Verbindungsstelle V (Fig. 2B) miteinander verbunden. Das Schirmblech 101 hat drei nach außen weisende Stutzen 106, 107 und 108, durch welche die Leitungen 102A-102C durchtreten und in das Schirmblech 101 eingeführt sind. An den Stutzen 106, 107 und 108 sind Crimphülsen 109 angebracht, welche an den Stutzen 106, 107 und 108 das Schirmblech mit den elektrischen Schirmen der Leitungen 102, 103 und 104 verbinden. Dieses Bauteil wird dann in ein isolierendes Kunststoffgehäuse geschoben, das aus Isoliermaterial, wie beispielsweise Polyamid (PA) oder Polybutylenterephthalat (PBT) hergestellt ist.

Fig. 2A zeigt einen Querschnitt durch die Leitung 102A stellvertretend für die Leitungen 102A-102C, die gleich aufgebaut sind.

Die Leitung 102A hat zwei Adern 201 und 202, mit jeweils einem elektrischen Leiter 203, der von einer Isolierung 204 umgeben ist. Die zwei Adern 201, 202 sind von einem inneren Mantel 206 eingeschlossen, der von einem elektrischen Schirm 207 umgeben ist. In Fig. 2A ist zwischen dem inneren Mantel 206 und dem Schirm 207 der Übersichtlichkeit halber ein Abstand 208 dargestellt, der in Wirklichkeit nicht vorhanden ist. Schließlich weist die Leitung 102 einen isolierenden Außenmantel 209 auf.

Wie aus Fig. 2B ersichtlich ist sind die Leiter der Adern 201 und 202 an einer Verbindungsstelle V durch elektrische Verbinder 211 und 212 elektrisch leitend miteinander verbunden.

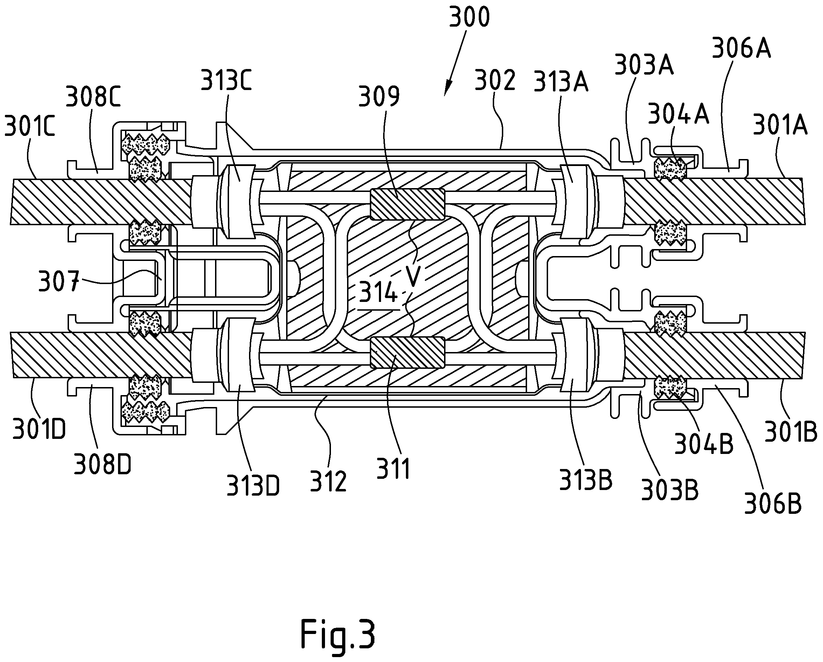

Fig. 3 zeigt ein weiteres Ausführungsbeispiel einer Anordnung 300 zur Verbindung von vier elektrischen Leitungen 301A-301D. Die Anordnung weist ein isolierendes Gehäuse 302 auf, das an der in Fig. 3 rechts liegenden Seite mit zwei Stutzen 303A, 303B versehen ist, durch welche jeweils eine der Leitungen 301A, 301B durchtritt und in das Gehäuse 302 eingeführt ist. Auf den Leitungen 301A, 301B sind jeweils eine Dichtung 304A, 304B, die auf der einen Seite an der Innenseite des jeweiligen Stutzen und auf der anderen Seite einem Außenmantel der durchtretenden Leitung anliegt. Von außen sind die Stutzen 303A, 303B mit Abdeckungen 306A, 306B verschlossen, die an den Stutzen festgelegt sind.

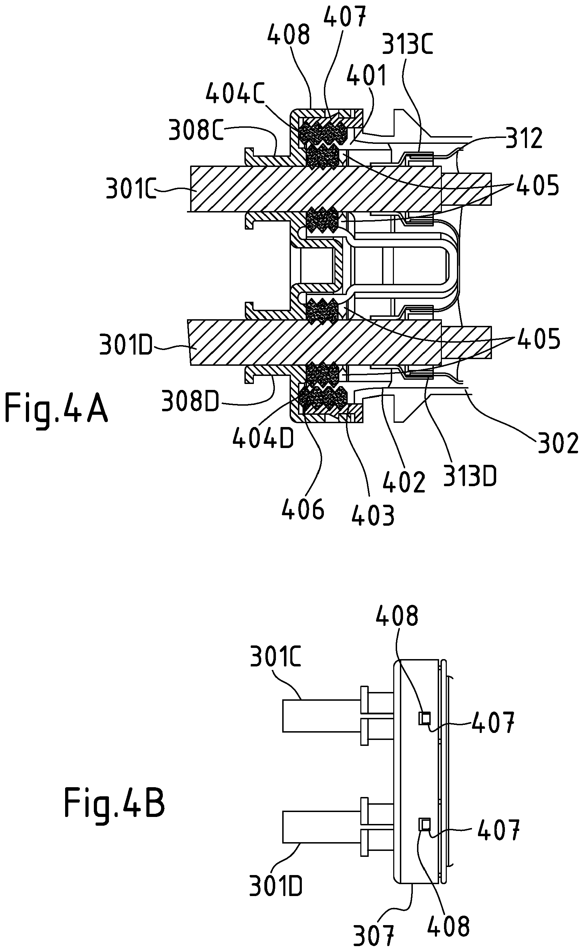

Auf der gegenüberliegenden in Fig. 3 links liegenden Seite ist das Gehäuse 302 mit einer einzelnen Abdeckkappe 307 verschlossen, die mit Stutzen 308C, 308D versehen ist, durch welche die beiden Leitungen 301C, 301D hindurch treten. Die Abdeckkappe 307 ist auf dem Gehäuse 302 verrastet. Die Einzelheiten wie die Abdichtung des Gehäuses 302 auf der in Fig. 3 links liegenden Seite erfolgt wird weiter unten im Zusammenhang mit Fig. 4A beschrieben.

Die Leitungen 301A-301D sind genauso aufgebaut wie die Leitungen 102A-102C und weisen zwei Adern auf, die von einem elektrisch leitenden Schirm 207 umgeben sind. Die jeweils eine der Adern der Leitungen 301A-301D sind in der Verbindungsstelle V elektrisch leitend miteinander verbunden. Die Verbindungsstelle V ist beispielsweise als Kontaktstück 309 ausgebildet, an das die elektrischen Leiter der jeweils einen Ader der Leitungen 301A-301D angeschweißt sind. Gleiches gilt für die jeweils anderen Adern der Leitungen 301A-301D, deren elektrische Leiter an ein Kontaktstück 311 angeschweißt sind, um eine elektrische Verbindung herzustellen.

Im Inneren des Gehäuses 302 befindet sich ein Abschirmungsgehäuse 312, an welches die elektrischen Schirme 207 der Leitungen 301A-301D angeschlossen sind. Das Abschirmungsgehäuse 312 liegt spielfrei an der Innenseite des isolierenden Gehäuses 302 an. Bei dem in Fig. 3 dargestellten Ausführungsbeispiel sind elektrisch leitende Kappen 313A-313D vorgesehen, die in Montageposition auf der einen Seite auf den elektrischen Schirm 207 einer der Leitungen und auf der anderen Seite auf einen Anschlussbereich des Abschirmungsgehäuses 312 aufgecrimpt sind, um eine durchgängige elektrische Abschirmung herzustellen. Bei einem vorteilhaften Ausführungsbeispiel bestehen die Kappen 313A-313D aus Edelstahl. In dem Innenraum des Abschirmungsgehäuses 312 ist ein aus Ethylen-Propylen-DienKautschuk (EPDM) hergestelltes Füllkissen 314 vorgesehen, das ein eingeschlossenes Luftvolumen verdrängt und die Verbindungsstellen V im Wesentlichen vibrationsfrei lagert. Das Füllkissen 314 macht daher ein Ausgießen des Abschirmungsgehäuses 312 überflüssig, wie es herkömmlicherweise vorgesehen ist. Die Verwendung des Füllkissens 314 bietet daher produktionstechnische Vorteile, beispielsweise wird dadurch die Ausschussrate vermindert.

Fig. 4A zeigt in einen gegenüber Fig. 3 vergrößerten Maßstab einen Ausschnitt der Anordnung 300. Fig. 4A zeigt insbesondere die konstruktiven Maßnahmen, um das Gehäuse 302 auf der in Fig. 3 links liegenden Seite dauerhaft gegenüber Umwelteinflüssen abzudichten. In das Gehäuse 302 ist ein Dichtungsträger 401 eingesetzt, der auf der dem Gehäuse 302 zugewandten Seite einen Konus 402 aufweist, der für einen festen und spielfreien Sitz des Dichtungsträgers 401 in dem Gehäuse 302 sorgt. An den Konus 402 grenzt ein umlaufender Flansch 403 an, der in Montageposition an einem Rand des Gehäuses 302 anliegt und einen Anschlag für den Dichtungsträger 401 bildet. In dem Dichtungsträger 401 sind Leitungsdichtungen 404C, 404D aufgenommen, die mit ihrem Innenumfang an dem Außenmantel der Leitung 301C bzw. 301D und mit ihrem Außenumfang an dem Dichtungsträger 401 anliegen. An dem Dichtungsträger 401 angeordnete umlaufende Vorsprünge 405 bilden Auflagen für die Leitungsdichtungen 404C, 404D. Die Leitungsdichtungen 404C, 404D gewährleisten eine Abdichtung zwischen den Leitungen 301C bzw. 301D und dem Dichtungsträger 401.

Weiterhin trägt der Dichtungsträger 401 eine Gehäusedichtung 406, die für eine Abdichtung zwischen dem Gehäuse 302 und den Dichtungsträger 401 sorgt. Der Flansch 403 bildet eine Auflage für die Gehäusedichtung 406.

In Montageposition ist über dem Dichtungsträger 401 die Abdeckkappe 307 angeordnet und mit dem Gehäuse 302 verrastet. Hierzu sind an dem Gehäuse 302 Rastnasen 407 vorgesehen, die in entsprechenden Ausnehmungen 408 in der Abdeckkappe 307 einrasten. Die Innenwand der Abdeckkappe 307 liegt an den Leitungsdichtungen 404C, 404D und der Gehäusedichtung 406 an. Die Innenseite der Stutzen 308C, 308D der Abdeckkappe 307 liegen fest an dem Außenmantel der Leitungen 301C, 301D an. Durch diese Anordnung werden mechanische Belastungen, die auf die Leitungen 301C, 301D ausgeübt werden, über die Abdeckkappe 307 direkt auf das Gehäuse 302 geleitet. Somit werden weder die Leitungsdichtungen 404C, 404D noch auf die Gehäusedichtung 406 ungewollten Belastungen ausgesetzt, die zu einer Beeinträchtigung der Abdichtung führen könnten.

Fig. 4B zeigt die auf dem Gehäuse 302 montierte Deckkappe 307 in einer Ansicht von oben auf die Anordnung 300.

Wie beschrieben sind bei dem in Fig. 3 dargestellten Ausführungsbeispiel zwei unterschiedliche Arten gezeigt, wie das Gehäuse 302 im Bereich der Leitungen gegenüber Umwelteinflüssen abgedichtet wird. Bei anderen Ausführungsbeispielen wird nur die eine oder die andere Art der Abdichtung benutzt.

Die Anordnung 300 wird beispielsweise wie folgt montiert:
Auf die zu verbindenden Leitungen 301A-301D werden zunächst die Abdeckkappen 306A, 306B und 307 aufgeschoben und dann die Leitungsdichtungen 404A-404D. Auf die Leitungen 301C und 301 D wird zusätzlich der Dichtungsträger 401 aufgeschoben, auf dem bereits die Gehäusedichtung 406 montiert ist. Danach werden die Verbindungsstellen V hergestellt und isoliert. Nach dem Einlegen des Füllkissens 314 wird ein zweiteiliges Abschirmungsblech um die verbundenen Leitungen herum gelegt, um das Abschirmungsgehäuse 312 zu bilden. Mit den leitenden Kappen 313A-313D werden die Schirme 207 der Leitungen 301A-301D an das Abschirmungsgehäuse 312 angeschlossen. Das Abschirmungsgehäuse 312 wird nun von dem Gehäuse 302, das beispielsweise aus zwei miteinander verrastbaren und dicht abschließenden Halbschalen gebildet ist, umgeben. Jetzt werden auf der einen Seite die Leitungsdichtungen 304A und 304B in die Stutzen 303A und 303B eingeschoben, wonach die Abdeckkappen 306A und 306B auf die Stutzen 303A und 303B aufgeschoben und dort verrastet werden. Auf der Seite des Gehäuses 302, wo die Leitungen 301C und 301D in das Gehäuse 302 eintreten, wird der Dichtungsträger 401 in das Gehäuse 302 eingeschoben, so dass der Konus 402 fest und spielfrei in dem Gehäuse 302 sitzt. Anschließend wird die Abdeckungskappe 307 über den Dichtungsträger 401 geschoben und auf dem Gehäuse 302 verrastet.

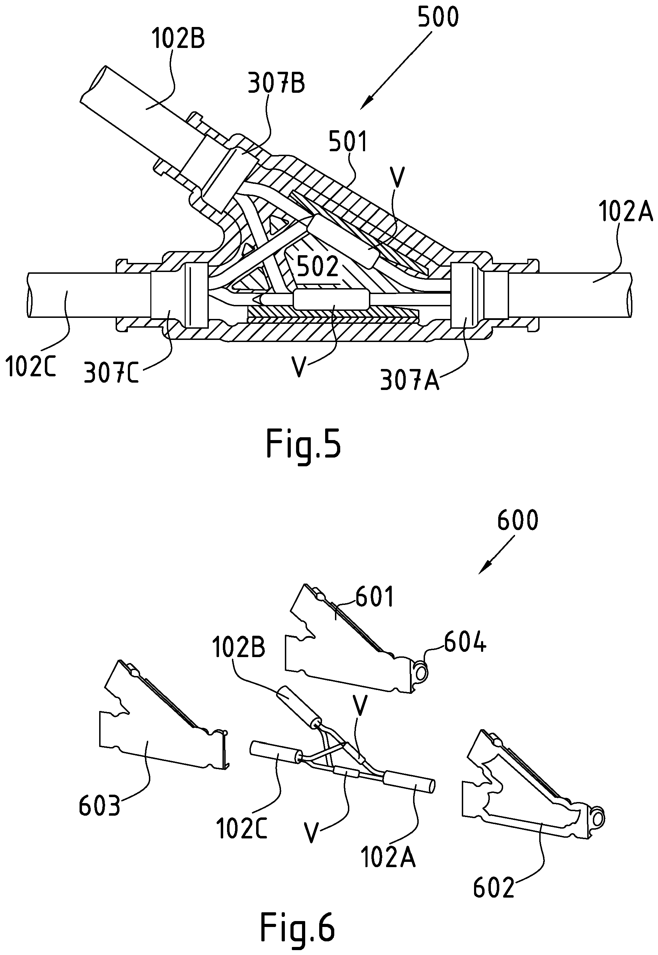

Die in den Figuren 5 und 6 dargestellten Beispiele von Anordnungen zur Verbindung von elektrischen Leitungen beschreiben nicht die Erfindung.

In Fig. 5 ist ein Beispiel einer Anordnung 500 zur Verbindung von elektrischen Leitungen dargestellt, die ein umspritztes Gehäuse 501 aufweist. Im Bereich der Verbindungsstellen V zwischen den Adern der Leitungen ist ein Füllkissen 502 vorgesehen. Auch das Füllkissen 502 ist aus Ethylen-Propylen-Dien-Kautschuk (EPDM) hergestellt. Durch diese Ausgestaltung muss der Innenraum des Gehäuses 501 nicht mehr durch die Spritzmasse gefüllt werden, was erstens zu einer Reduzierung der Fertigungszeit und zweitens zu einer Reduzierung des Ausschusses führt. Letzteres ist von erheblicher Bedeutung, weil mit jedem fehlerhaften Produkt auch die darin enthaltenen relativ teuren HV-Leitungen verschrottet werden müssen.

Bei der Herstellung der Anordnung 500 wird der Splice gemeinsam mit dem Füllkissen 502 in ein Spritzgießwerkzeug eingelegt, um den Splice mit dem Gehäuse 501 zu umspritzen.

In den bisher vorgestellten Anordnungen zur Verbindung von mehreren elektrischen Leitungen sind relativ viele Dichtungen in einem frühen Herstellungsstadium zu montieren, was einen nicht unerheblichen Aufwand verursacht.

Bei dem in Fig. 6 dargestellten Beispiel einer Anordnung 600 wird nur eine einzige Dichtung 601 bei der Endmontage des Splices montiert. Die Anordnung 600 weist ein Gehäuse 602 auf, das mit einem Deckel 603 verschließbar ist. Die Dichtung 601 weist eine Außenkontur auf, die an die Innenkontur des Gehäuses 602 sowie einen den flachen Deckel 603 angepasst ist. Weiterhin ist die Dichtung 601 mit einem Schlitz 604 in Gestalt eines Ypsilon versehen, so dass bei der Montage die Dichtung 601 über die bereits miteinander verbundenen Leitungen 102A, 102B und 102C gestülpt und in das Gehäuse 602 eingelegt werden kann. Anschließend wird der Deckel 603 aufgesetzt und mit dem Gehäuse 602 verrastet. Dabei wird Druck auf die Dichtung 601 ausgeübt und dadurch eine Abdichtung der Verbindungsstelle erzielt. Bei der Darstellung in Fig 6 ist der Übersichtlichkeit halber kein Abschirmblech dargestellt. In Wirklichkeit ist aber wie bei den anderen Ausführungsbeispielen ein Abschirmblech vorhanden.

In den Ansprüchen schließen die Wörter "aufweisen" und "umfassen" nicht andere Elemente oder Schritte aus und der unbestimmte Artikel "ein" schließt eine Mehrzahl nicht aus.

**Bezugszeichenliste**

| | |
|---|---|
| 100 Anordnung | 401 Dichtungsträger |
| 101 Gehäuse | 402 Konus |
| 102A-102C Leitungen | 403 Flansch |
| 103A-103C Stutzen | 404C, 404D Leitungsdichtung |
| 109 Abdeckkappen | 405 umlaufender Vorsprung; |
| | 406 Gehäusedichtung |
| 201,202 Adern | 407 Rastnase |
| 203 elektrische Leiter | 408 Ausnehmung |
| 204 Isolierung | 500 Anordnung |
| 206 innerer Mantel | 501 Gehäuse |
| 207 Schirm | 502 Füllkissen |
| 208 Abstand | |
| 209 Außenmantel | 600 Anordnung |
| | 601 Dichtung |
| 211, 212 Verbindungsstelle | 602 Gehäuse |
| | 603 Deckel |
| 300 Anordnung | |
| 301A-301D Leitungen | |
| 302 isolierendes Gehäuse | |
| 303A, 303B Stutzen | |
| 304A, 304B Dichtung | |
| 306A, 306B Abdeckung | |
| 307 Abdeckkappe | |
| 308C, 308D Stutzen | |
| 309, 311 Kontaktstück | |
| 312 Abschirmungsgehäuse | |
| 313A-313D leitende Kappen | |
| 314 Füllkissen | |

## Patentansprüche

1. Anordnung zur elektrisch leitenden Verbindung mehrerer elektrischer Leitungen (102A-102C; 301A-301D), die mit einem elektrisch leitenden Schirm (207) versehen sind, wobei die Leiter (203) der Leitungen im Bereich einer Verbindungsstelle (V) elektrisch leitend miteinander verbunden sind, wobei die Anordnung (100; 300) ein mechanisch stabiles Gehäuse (101; 302) umfasst, das die Verbindungsstelle (V) vollständig umschließt, wobei die Anordnung einen Dichtungsträger (401) umfasst, der einen Konus (402) aufweist, der in der Montageposition in dem Gehäuse (302) aufgenommen ist, **dadurch gekennzeichnet, dass** der Dichtungsträger (401) eine Leitungsdichtung (404C, 404D) und eine Gehäusedichtung (406) trägt.

2. Anordnung nach Anspruch 1, **dadurch gekennzeichnet, dass** in dem Gehäuse (101; 302) eine weitere Dichtung (304A, 304B) angeordnet ist, die das Gehäuse abdichtet.

3. Anordnung nach Anspruch 1, **dadurch gekennzeichnet, dass** die Leitungsdichtung (404C, 404D) zwischen einer Leitung (301C, 301D) und dem Dichtungsträger (401) angeordnet ist und dass die Gehäusedichtung (406) zwischen dem Gehäuse (302) und dem Dichtungsträger (401) angeordnet ist.

4. Anordnung nach einem der vorstehenden Ansprüche, **dadurch gekennzeichnet, dass** eine Abdeckkappe (307) vorgesehen ist, die mit dem Gehäuse (302) mechanisch fest verbunden ist.

5. Anordnung nach einem der vorstehenden Ansprüche, **dadurch gekennzeichnet, dass** in dem Gehäuse (302) ein Füllkissen (314) angeordnet ist, das den Zwischenraum zwischen der Verbindungsstelle (V) der Leitungen und einem Abschirmungsgehäuse oder dem Gehäuse ausfüllt.

## Claims

1. An arrangement for the electrically conductive connection of a plurality of electrical lines (102A-102C, 301A-301D), which are provided with an electrically conductive shield (207), wherein the conductors (203) of the lines are electrically conductively connected with one another in the region of a connecting point (V), wherein the arrangement (100; 300) comprises a mechanically stable housing (101; 302), which completely surrounds the connecting point (V), wherein the arrangement comprises a seal carrier (401), which has a cone (402), which is accommodated in the mounting position in the housing (302), **characterized in that** the seal carrier (401) carries a line seal (404C, 404D) and a housing seal (406).

2. The arrangement according to claim 1, **characterized in that** a further seal (304A, 304B), which seals the housing, is arranged in the housing (101, 302).

3. The arrangement according to claim 1, **characterized in that** the line seal (404C, 404D) is arranged between a line (301C, 301D) and the seal carrier (401) and that the housing seal (406) is arranged between the housing (302) and the seal carrier (401).

4. The arrangement according to any one of the preceding claims, **characterized in that** a cover cap (307) is provided, which is mechanically firmly connected to the housing (302).

5. The arrangement according to any one of the preceding claims, **characterized in that** a filling cushion (314) is arranged in the housing (302), which filling cushion fills the intermediate space between the connecting point (V) of the lines and the shielding housing or the housing.

## Revendications

1. Ensemble destiné à la connexion électriquement conductrice de plusieurs lignes (102A-102C; 301A-301D) électriques qui sont munies d'un écran (207) électriquement conducteur, les conducteurs (203) des lignes étant connectés les uns aux autres de façon électriquement conductrice dans la zone d'un point de connexion (V), l'ensemble (100 ; 300) comprenant un boîtier (101 ; 302) mécaniquement stable qui entoure complètement le point de connexion (V), l'ensemble comprenant un support de joint d'étanchéité (401) qui comporte un cône (402) qui, dans la position montée, est logé dans le boîtier (302), **caractérisé en ce que**
le support de joint d'étanchéité (401) porte un joint d'étanchéité de ligne (404C, 404D) et un joint d'étanchéité de boîtier (406).

2. Ensemble selon la revendication 1, **caractérisé en ce que**, dans le boîtier (101 ; 302), il est disposé un autre joint d'étanchéité (304A, 304B) qui assure l'étanchéité du boîtier.

3. Ensemble selon la revendication 1, **caractérisé en ce que** le joint d'étanchéité de ligne (404C, 404D) est disposé entre une ligne (301C, 301D) et le support de joint d'étanchéité (401), et **en ce que** le joint d'étanchéité de boîtier (406) est disposé entre le boîtier (302) et le support de joint d'étanchéité (401).

4. Ensemble selon l'une des revendications précédentes, **caractérisé en ce qu'**il est prévu un capot de protection (307) qui est raccordé de façon mécaniquement ferme au boîtier (302).

5. Ensemble selon l'une des revendications précédentes, **caractérisé en ce que**, dans le boîtier (302), il est disposé un coussin de remplissage (314) qui remplit l'espace intermédiaire entre le point de connexion (V) des lignes et le boîtier de blindage ou le boîtier.
